# EUROPÄISCHE PATENTANMELDUNG

(11) **EP 1 701 190 A1**
(43) Veröffentlichungstag der Anmeldung: **13.09.2006**
(21) Anmeldenummer: 06004088.8
(22) Anmeldetag: 01.03.2006
(51) Int. Cl.: G02B 6/44

(54) **Glasfaser- Endverschluss**

(30) Priorität: 09.03.2005 DE 102005011208
(71) Anmelder: ADC GMBH, 14167 Berlin (DE)
(72) Erfinder: Adomeit, Jörg, 12307 Berlin (DE); Nijhuis, Antony, 64397 Modautal-Brandau (DE); Karbstein, Thea, 12557 Berlin (DE); Brunzel, Joachim, 13469 Berlin (DE)

(57) **Zusammenfassung**

Die Erfindung betrifft einen Glasfaser-Endverschluss (1), umfassend eine Montagewanne mit Bodenplatte (2) und Schenkeln (3, 4), wobei an den Schenkeln (3, 4) der Montagewanne Frontplatten (5) befestigt sind, in denen Glasfaser-Kupplungen (9) oder -Adapter angeordnet sind.

## Beschreibung

Die Erfindung betrifft einen Glasfaser-Endverschluss in einem Kabelverzweiger oder einen Hauptverteiler.

In bestehenden Kupfer-Telekommunikationsnetzen ist das Zugangsnetz meist als Sternnetz ausgebildet. Bei diesem Netzaufbau werden die Hauptkabel aus der Vermittlungsstelle herausgeführt und auf die verschiedenen Kabelverzweiger der entsprechenden Teilnehmergebiete aufgeteilt. Die Aufteilung des Hauptkabels auf die verschiedenen Kabelverzweiger erfolgt über Kabelmuffen. Von den Kabelmuffen gehen dann die aufgeteilten Hauptkabel an die Kabelverzweiger, wo diese an Endverschlüssen angeschlossen und als Verzweigungskabel in den jeweiligen Straßenzügen der Teilnehmer verlegt werden. Die Verbindung zum Endverzweiger des Teilnehmers erfolgt dann meist mit einer Muffe im Verzweigungskabel. Durch dieses Auffächern des Netzes zum Teilnehmer hin ist der Anschluss der Hauptkabel an der Teilnehmer- bzw. Linienseite am Hauptverteiler der einzige Ort im Zugangsnetz, wo alle Anschlüsse (Linien) räumlich zusammenlaufen und zentral prüfbar sind. Die Anzahl der Endverschlüsse in einem Kabelverzweiger ist abhängig von der Bauform des Kabelverzweigers, wobei jedoch ein typischer Wert bei 12 Endverschlüssen pro Kabelverzweiger liegt.

Ein Endverschluss besteht beispielsweise aus einer Montage- bzw. Aufnahmewanne für 10 Anschlussleisten, die jeweils wieder 10 Doppeladem anschließen kann. Somit können also mit einem Endverschluss 100 Doppeladern angeschlossen werden. Die Aufnahmewanne wird dann vorzugsweise mit vormontierten Klemmmuttern in das Kabelverzweigergestell eingehängt, wobei dann die Klemmmuttern hinter die Gestellschienen schnappen. Durch Festziehen von passenden Schrauben wird dann die Aufnahmewanne festgeklemmt sowie eine Erdverbindung hergestellt.

Die Gestellschienen können dabei von der Länge derart dimensioniert sein, dass mehrere Endverschlüsse einschnappen können (beispielsweise drei) oder aber für nur einen Endverschluss ausgelegt seien.

Parallel zu den bekannten Kupfer-Telekommunikationsnetzen gewinnen Glasfasernetzwerke zunehmend an Bedeutung. Dabei erfolgt die Verteilung der Glasfaserkabel in Form von Bündeladern von der Vermittlungsstelle, wobei von der gleichen Vermittlungsstelle Kupfer-Hauptkabel als auch Glasfaser-Bündeladern abgehen. Die Verteilung zu den Teilnehmer erfolgt dann aber über separate Glasfaser-Kabelverzweiger, die beispielsweise in Form von 19"-Einschüben ausgebildet sind. Dort werden die ankommenden Glasfaseradem gespleißt und in Form von Bündeladern an die Endverzweiger des Teilnehmers weitergeleitet. Nachteilig an dieser parallelen Struktur sind die relativ hohen Kosten bei der Nachrüstung auf Glasfaser-Kabel sowie das arbeitsintensive Spleißen der Glasfaseradern. Ein ähnliches Problem stellt sich beim Übergang zur Vermittlungsstelle selbst. Insbesondere aus brandschutztechnischen Überlegungen dürfen keine Außenkabel in die Vermittlungsstelle geführt werden. Daher werden die Außenkabel zunächst zu einem Kabelaufteilungsgestell geführt, das im Regelfall an einen abgetrennten Ort an der Vermittlungsstelle aufgebaut ist. Das Kabelaufteilungsgestell kann dabei in Form eines Gestells oder aber auch als Kabelaufteilungsmuffe ausgebildet sein. Dort wird das Außenkabel auf ein Innenkabel gespleißt und zum Hauptverteiler geführt. Dort wiederum werden dann Pigtails an das Innenkabel gespleißt, die dann zum Hauptverteiler gehen.

Der Erfindung liegt daher das technische Problem zugrunde, die Errichtung von Glasfaserübertragungsstrecken zu vereinfachen.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst der Glasfaser-Endverschluss eine Montagewanne, wobei an den Schenkeln der Montagewanne Frontplatten befestigt sind, in denen Glasfaser-Kupplungen oder -Adapter angeordnet sind. Hierdurch wird es möglich, die Glasfaser-Endverschlüsse in den gleichen Kabelverzweigergehäusen anzuordnen wie die Kupfer-Endverschlüsse. Ein weiterer Vorteil ist, dass hierdurch auch ein vermischter Verbau von Kupfer- und Glasfaser-Endverschlüssen in einem Kabelverzweigergehäuse möglich ist. Bei Einsatz des Glasfaser-Endverschlusses kann dabei der Spleißvorgang am Hauptverteiler eingespart werden. Dabei wird unter einer Kupplung eine Aufnahme für zwei gleichartige Stecker (beispielsweise zwei SC-Stecker) und unter einem Adapter eine Aufnahme für zwei unterschiedliche Stecker (wie beispielsweise ST- und SC-Stecker) verstanden. Die Kupplungen bzw. Adapter ermöglichen es, ohne zu spleißen die Glasfasern zu rangieren. Hierzu werden diese beispielsweise mittels eines Außen- bzw. Innenkabels mit Bündeladeraufbau an den Endverschluss herangeführt und an der Rückseite der Kupplungen bzw. Adapter angeschlossen. Dabei kommt bei Einsatz in einem Kabelverzweiger ein Außenkabel zur Anwendung, wohingegen im Hauptverteiler ein Innenkabel Verwendung findet. Mittels eines weiteren Außen- bzw. Innenkabels (je nach Einsatzort) oder Einzel-Kabels können dann die Glasfasern an der Frontseite angeschlossen und zu den Teilnehmern bzw. dem Hauptverteiler geführt werden. Dabei ist es weiter möglich, den Glasfaser-Endverschluss bereits mit dem Innen- bzw. Außenkabel mit Bündeladeraufbau für die Rückseite des Glasfaser-Endverschlusses vorzukonfektionieren, wobei die Länge des Innen- bzw. Außenkabels vom Kunden gewählt werden kann. In diesem Fall kann der Monteur des Kunden den vorkonfektionierten Glasfaser-Endverschluss von einer Muffe zu dem Kabelverzweiger bzw. Hauptverteiler führen und dort einbauen.

In einer bevorzugten Ausführungsform ist die Montagewanne mit vormontierten Klemmmuttern ausgebildet. Hierdurch ist die Befestigung der Glasfaser-Endverschlüsse sehr einfach an den Gestellschienen des Kabelverzweigergehäuses möglich und darüber hinaus kompatibel zu den Befestigungen der Kupfer-Endverschlüsse.

In einer weiteren bevorzugten Ausführungsform weist die Bodenplatte der Montagewanne eine Öffnung auf. Durch diese Öffnung können dann die Glasfaserkabel mit Stecker einfach an die Kupplungen bzw. Adapter geführt werden.

In einer weiteren bevorzugten Ausführungsform sind die Frontplatten in einem Winkel ungleich 180° zur Bodenplatte der Montagewanne ausgerichtet. Hierdurch wird erreicht, dass die Biegeradien der von der Vorderseite der Frontplatte abgehenden Glasfaserkabel ausreichend groß sind sowie kein Schmutz in die Kupplungen bzw. Adapter fallen kann.

In einer weiteren bevorzugten Ausführungsform sind die Kupplungen oder Adapter mittels eines Frontclips von der Vorderseite der Frontplatte her lösbar befestigt. Hierdurch wird erreicht, dass die Kupplungen von der Vorderseite der Frontplatte gelöst werden können und die von der Rückseite gesteckten Lichtwellenleiter-Stecker gezogen und beispielsweise geputzt werden können. Diese sehr einfache Entnahme von der Vorderseite ermöglicht einen sehr kompakten Aufbau, so dass auch eine entsprechend hohe Bestückungsdichte pro Glasfaser-Endverschluss möglich ist. Hinsichtlich der Ausgestaltung des Frontclips wird ausdrücklich auf die WO 02/27373 A1 Bezug genommen.

Die Erfindung wird nachfolgend anhand eines bevorzugten Ausführungsbeispieles näher beschrieben. Die Fig. zeigen:
- Fig. 1: eine Vorderansicht eines Glasfaser-Endverschlusses an Gestellschienen eines Kabelverzweigergehäuses und
- Fig. 2: eine Rückansicht auf den Glasfaser-Endverschluss gemäß Fig. 1.

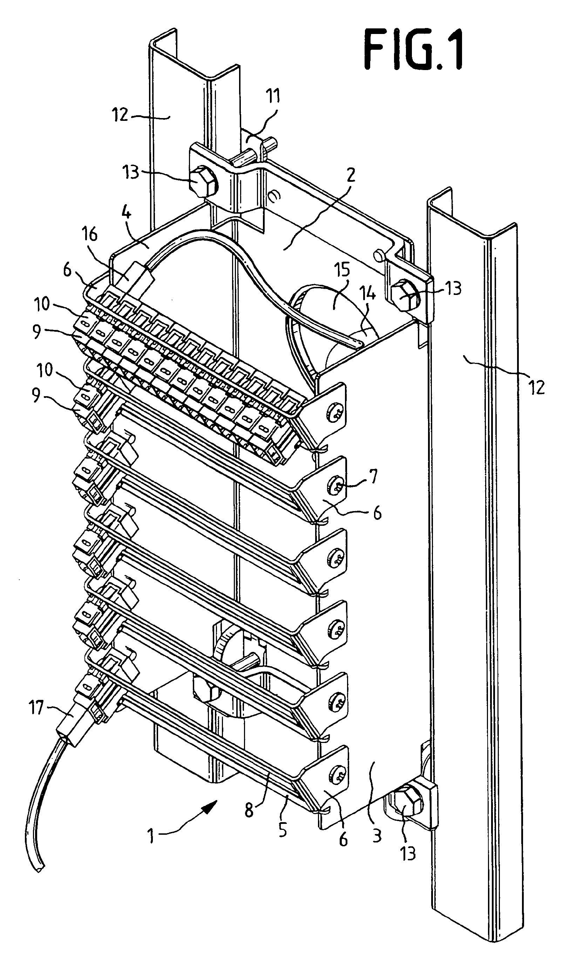

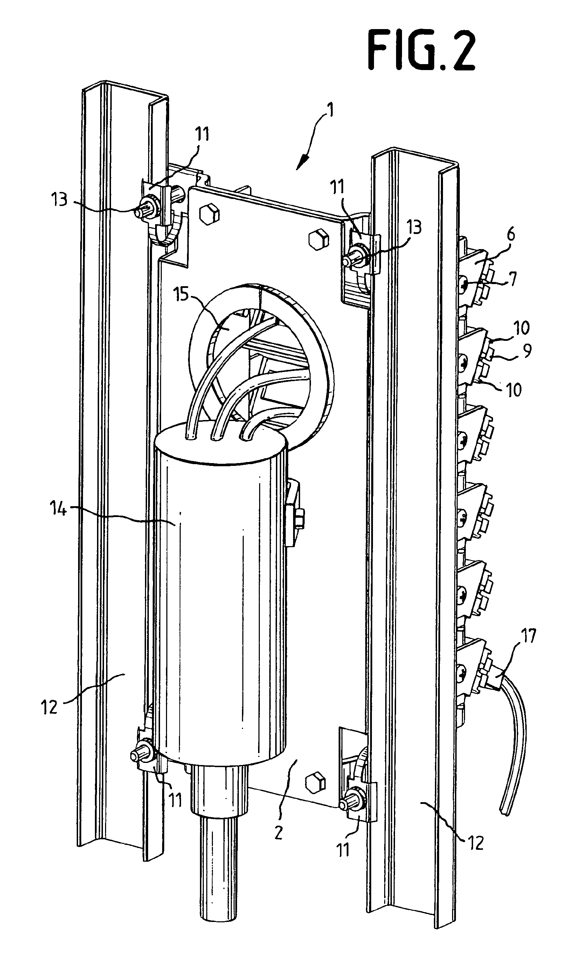

Der Glasfaser-Endverschluss 1 umfasst eine im Querschnitt U-förmige Montagewanne, umfassend eine Bodenplatte 2 und zwei Schenkel 3, 4. An den von der Bodenplatte 2 entfernten Enden der Schenkel 3, 4 sind sechs Frontplatten 5 mit seitlichen Abwinkelungen 6 mittels Schrauben 7 befestigt. Die Frontplatten 5 weisen eine rechteckförmige Öffnung 8 auf, in die zwölf Kupplungen 9 gesteckt sind, wobei aus Gründen der Übersicht nur die oberste Frontplatte 5 voll bestückt dargestellt ist. Die Kupplungen 9 sind mit einem zweiteiligen Frontclip 10 ausgebildet, wobei jeweils ein Teil auf der Oberseite der Kupplung 9 und ein Teil auf der Unterseite der Kupplung 9 angeordnet ist. Jedes Teil des Frontclips 10 umfasst zwei Rasthaken, die von der Rückseite hinter die Frontplatte 5 greifen und die Kupplung 9 somit verrasten. Durch Druck auf die plattenförmigen Teile des Frontclips 10 werden diese Rasthaken angehoben und die Kupplung 9 entrastet, so dass diese von der Frontseite der Frontplatte entnommen werden kann. Dabei ist die Frontseite die der Bodenplatte abgewandte Seite der Frontplatte 5. Die Frontplatten 5 sind in einem Winkel ungleich 180° zur Bodenplatte 2 der Montagewanne ausgerichtet, d.h. Frontplatte 5 und Bodenplatte 2 sind nicht parallel. Des Weiteren umfasst der Glasfaser-Endverschluss 1 vier Klemmmuttern 11, mittels derer die Montagewanne hinter zwei Gestellschienen 12 eingeschnappt wird. Mittels Schrauben 13 wird dann die Montagewanne festgeschraubt. Wie in der Fig. 2 zu sehen, ist hinter der Bodenplatte 2 ein Außenkabel 14 mit Bündeladeraufbau angeordnet. Ein Außenkabel 14 mit Bündeladeraufbau ist ein Bündelkabel, an deren einem Ende die einzelnen Glasfasern mit einem Stecker abgeschlossen sind. Die Glasfasern mit dem Stecker werden durch eine Öffnung 15 in der Bodenplatte 2 gezogen und in die Rückseite der Kupplungen 9 gesteckt. Exemplarisch ist ein Stecker 16 des Außenkabels 14 mit Bündeladeraufbau im gesteckten Zustand in Fig. 1 dargestellt. Genauso ist exemplarisch ein Stecker 17 dargestellt, der in die Vorderseite der Kupplung eingesteckt ist, wobei dieser ebenfalls Bestandteil eines Außenkabels mit Bündeladeraufbau sein kann oder aber einem einfachen Glasfaserkabel zugeordnet sein kann. In der Fig. 2 ist das Außenkabel 14 parallel zur Frontplatte geführt. Sollen jedoch mehrere Glasfaser-Endverschlüsse übereinander angeordnet werden, so werden vorzugsweise die Außenkabel 14 mit Bündeladeraufbau schräg an die Rückseite der Frontplatte 5 geführt. Weiter kann der Glasfaser-Endverschluss mit einem Deckel ausgebildet sein. Dieser Deckel dient einerseits als Schutz gegen Verschmutzung und kann andererseits als Beschriftungsfläche genutzt werden.

Der dargestellte Glasfaser-Endverschluss 1 ist vorzugsweise Bestandteil eines Kabelverzweigers, umfassend ein Gehäuse, in dem mindestens zwei Gestellschienen abgeordnet sind.

### Bezugszeichenliste

- 1: Glasfaser-Endverschluss
- 2: Bodenplatte
- 3: Schenkel
- 4: Schenkel
- 5: Frontplatte
- 6: seitliche Abwinkelungen
- 7: Schrauben
- 8: rechteckförmige Öffnung
- 9: Kupplungen
- 10: Frontclip
- 11: Klemmmuttern
- 12: Gestellschienen
- 13: Schrauben
- 14: Außenkabel
- 15: Öffnung
- 16: Stecker
- 17: Stecker

## Patentansprüche

1. Glasfaser-Endverschluss (1), umfassend eine Montagewanne mit Bodenplatte (2) und Schenkeln (3, 4), wobei an den Schenkeln (3, 4) der Montagewanne Frontplatten (5) befestigt sind, in denen Glasfaser-Kupplungen (9) oder -Adapter angeordnet sind.

2. Glasfaser-Endverschluss nach Anspruch 1, **dadurch gekennzeichnet, dass** die Montagewanne mit vormontierten Klemmmuttern (11) ausgebildet ist.

3. Glasfaser-Endverschluss nach Anspruch 1 oder 2, **dadurch gekennzeichnet, dass** die Bodenplatte (2) der Montagewanne mindestens eine Öffnung (15) aufweist.

4. Glasfaser-Endverschluss nach einem der vorangegangenen Ansprüche, **dadurch gekennzeichnet, dass** die Frontplatten (5) in einem Winkel ungleich 180° zur Bodenplatte (2) der Montagewanne ausgerichtet sind.

5. Glasfaser-Endverschluss nach einem der vorangegangenen Ansprüche, **dadurch gekennzeichnet, dass** die Kupplungen (9) oder Adapter mittels eines Frontclips (10) von der Vorderseite der Frontplatte (5) her lösbar befestigt sind.
